(19) Europäisches Patentamt
European Patent Office
Office européen des brevets

(11) **EP 1 063 250 B1**

(12) **EUROPÄISCHE PATENTSCHRIFT**

(45) Veröffentlichungstag und Bekanntmachung des Hinweises auf die Patenterteilung:
**25.02.2004 Patentblatt 2004/09**

(51) Int Cl.⁷: **C08G 18/54**, C08G 18/08, C09D 17/00

(21) Anmeldenummer: **00112553.3**

(22) Anmeldetag: **14.06.2000**

(54) **Wasserverdünnbare Harze, Verfahren zu ihrer Herstellung und ihre Verwendung**

Water-dilutable resins, process for their preparation and their use

Résines diluables dans l'eau, procédé pour leur préparation et leur utilisation

(84) Benannte Vertragsstaaten:
**AT BE CH CY DE DK ES FI FR GB GR IE IT LI LU MC NL PT SE**

(30) Priorität: **21.06.1999 AT 108399**

(43) Veröffentlichungstag der Anmeldung:
**27.12.2000 Patentblatt 2000/52**

(73) Patentinhaber: **Surface Specialties Austria GmbH**
**8402 Werndorf (AT)**

(72) Erfinder:
• **Hobisch, Gerald, Dr.**
**8042 Graz (AT)**

• **Tümmler, Peter, Dr.**
**8010 Graz (AT)**
• **Morre, Peter**
**8020 Graz (AT)**

(74) Vertreter: **Deckers, Hellmuth, Dr.**
**European Patent Attorney,**
**Bahnhofstrasse 26/A**
**55218 Ingelheim (DE)**

(56) Entgegenhaltungen:
**EP-A- 0 827 973        EP-A- 0 838 486**

**Beschreibung**

Die Erfindung betrifft als Pigmentpastenharze geeignete, nach Neutralisation wasserverdünnbare Harze erhältlich durch Umsetzung von Hartharzen auf Basis von Aldehyden oder Ketonen mit mehrfunktionellen Isocyanaten und mindestens einer gegenüber Isocyanat reaktiven hydrophilen Komponente.

Hartharze auf Basis von Aldehyden oder Ketonen, in der Fachsprache in vereinfachter Form meist als Aldehyd- bzw. Ketonharze bezeichnet, sind seit langem bekannt. Diese Hartharze sind auf Grund ihrer spezifischen lacktechnischen Eigenschaften, wie helle Farbe, Verseifungs- und Vergilbungsbeständigkeit, gute Verträglichkeit mit anderen Lackbindemitteln und sehr gute Löslichkeit in polaren organischen Lösungsmitteln wichtige Rohstoffe für Nitrolacke und Alkydharzlacke. Auch in speziellen Anwendungsgebieten, beispielsweise als Basisharz für lösungsmittelhaltige Universalpigmentpasten, haben sie in den letzten Jahren eine große praktische Bedeutung erlangt.

Auf Grund der Forderung nach umweltfreundlichen Lacken haben Aldehyd- und Ketonharze aus der Sicht der Lackhersteller und Lackverbraucher jedoch einen wesentlichen Nachteil: sie sind unlöslich in Wasser.

Aus der Patentliteratur sind nur einige Versuche bekannt, stabile wäßrige Dispersionen auf Basis von Aldehyd- und Ketonharzen herzustellen, beispielsweise beschrieben in der DE-A 34 06 474, in der ein Schutzkolloid und spezielle Copolymerisate mitverwendet werden.

Eine weitere Möglichkeit, diese Harze wasserlöslich bzw. wasserdispergierbar zu machen, ist in der AT-1682/97 beschrieben, wobei die (Hydroxylgruppen-haltigen) Aldehyd- bzw. Ketonharze mit Säuregruppen-haltigen Polymeren unter Kondensationbedingungen umgesetzt werden. Nach (teilweiser) Neutralisation der verbliebenen Säuregruppen sind die Kondensate wasserverdünnbar. Durch den Kondensationsschritt werden jedoch die Moleküle erheblich vergrößert; dadurch werden die Verträglichkeits-Eigenschaften mit anderen Harzen verschlechtert. Werden die Pastenharze nach dieser Anmeldung in Einbrenn-Lacken verwendet, so beobachtet man eine leichte bis deutliche Vergilbung. Dies kann bei pigmentierten Lacken zu Farbveränderungen führen.

Aus der EP-A 0 838 485 ist bekannt, Hydroxylgruppen-haltige Aldehyd- oder Ketonharze mit Polycarbonsäuren, deren Estern, Anhydriden oder Halogeniden umzusetzen und auf diese Weise zu wasserlöslichen Derivaten dieser Harze zu gelangen. Nachteilig ist dabei die Einführung der frei zugänglichen Säuregruppen, wodurch Unverträglichkeiten mit Pigmenten ausgelöst werden können. Weiter ist aus der EP-A 0 838 486 bekannt, Hydroxylgruppen-haltige Aldehyd- oder Ketonharze mit hydrophilen Isocyanaten umzusetzen, die durch Umsetzung mindestens eines (mehrfunktionellen) Isocyanats mit Verbindungen erhalten werden, die zusätzlich zur hydrophilen oder potentiell hydrophilen Gruppe (d. h. einer Gruppe, die nach Neutralisation hydrophil wird) mindestens eine gegenüber Isocyanaten reaktive Funktion aufweisen und die einen gemäß dem Zerewitinow-Test aktiven Wasserstoff besitzen. Diese Produkte enthalten jedoch ein vorgegebenes Verhältnis von hydrophilen Gruppen und (noch reaktiven) Isocyanatgruppen. Darüberhinaus erfordert die dort beschrieben Verfahrensweise ein zweistufige Umsetzung. Es ist gegenüber diesem Stand der Technik erwünscht, ein einfacheres und flexibleres Verfahren zur Verfügung zu stellen, mit dem ein variables Produktspektrum hergestellt werden kann.

Aufgabe der vorliegenden Erfindung war es, wasserverdünnbare Harze auf Basis von Aldehyd- oder Ketonharzen zur Verfügung zu stellen, die bei Erhitzen möglichst wenig vergilben, wobei durch die hydrophile Modifizierung eine möglichst geringe Vergrößerung des Moleküls erfolgt.

Es wurde gefunden, daß es möglich ist, Aldehyd- und Ketonharze mit mindestens difunktionellen Isocyanaten und solchen hydrophilen Modifizierungsmitteln umzusetzen, die mindestens eine gegenüber Isocyanat reaktive Gruppe und mindestens eine hydrophile nichtionische oder anionische Gruppe im Molekül haben. Es können auch Mischungen solcher nichtionischen und anionischen hydrophilen Modifizierungsmittel eingesetzt werden.

Die Erfindung betrifft demnach ein Verfahren zur Herstellung von wasserverdünnbaren urethanmodifizierten Pasten- und Zumischharzen **ABCD,** wobei eine Reaktionsmischung mit Massenanteilen von

| | |
|---|---|
| 10 bis 90 % | Aldehyd- bzw. Keton-Harzen **A** mit einer Hydroxylzahl von 20 bis 300 mg/g, einer Erweichungstemperatur von 60 bis 140 °C und einer zahlenmittleren molaren Masse $M_n$ von 500 bis 3000 g/mol, |
| 5 bis 30 % | mehrfunktionellen Isocyanaten **B** mit im Mittel mindestens 2 Isocyanat-Gruppen pro Molekül, |
| 0 bis 30 % | aliphatischen Säuren **C** mit jeweils mindestens einer Säuregruppe und jeweils mindestens einer Gruppe, die mit Isocyanaten unter Bildung einer Urethan-oder Harnstoff-Struktur reagieren kann, sowie |
| 0 bis 70 % | eines aliphatischen Polyäthers **D** mit einer zahlenmittleren molaren Masse $M_n$ von 200 bis 8000 g/mol und mindestens einer Hydroxylgruppe pro Molekül, |

bei erhöhter Temperatur umgesetzt wird, bis der Massenanteil von Isocyanat-Gruppen in der Reaktionsmischung unter 0,1 % gesunken ist, wobei die Summe der Massenanteile der Edukte **A** bis **D** stets 100 % ergibt, und mindestens eines der Edukte **C** und **D** eingesetzt wird.

Gegebenenfalls werden die Produkte **ABCD** anschließend mit wäßrigem Ammoniak oder Aminen neutralisiert, falls eine Verbindung gemäß C eingesetzt wird. Die Massenanteile in der Reaktionsmischung betragen bevorzugt für **A** 35 bis 85 %, für **B** 10 bis 25 %, für **C** 2 bis 10 %, und für **D** 5 bis 30%, wobei der Massenanteil von **C** gleich Null sein kann, wenn mindestens ein Polyäther **D** eingesetzt wird, oder der Massenanteil von **D** gleich Null sein kann, wenn wenigstens eine der Säuren **C** eingesetzt wird.

Die Aldehyd- bzw. Keton-Harze **A** sind bevorzugt Harze, die durch Kondensation von (cyclo)aliphatischen Oxoverbindungen **A1** ausgewählt aus (cyclo)aliphatischen Ketonen **A11** und aliphatischen Aldehyden **A12** gemeinsam mit Harnstoff bzw. dessen Derivaten **A2** (gemeinsam im Folgenden auch als "Harnstoffe" bezeichnet) erhältlich sind.

Als Harnstoff-Derivate **A2** werden im Rahmen der vorliegenden Erfindung N-alkylierte, N-arylierte oder N-acylierte Harnstoffe betrachtet, bei denen mindestens ein und maximal 3 amidische Wasserstoffatome durch einen Alkyl-, Aryl- oder Acylrest substituiert sind. Geeignete Alkylreste sind lineare, verzweigte und cyclische aliphatische Reste mit 1 bis 20 Kohlenstoffatomen, geeignete Arylreste sind (gegebenenfalls alkylsubstituierte) Arylreste mit 5 bis 14 Kohlenstoffatomen wie der Phenyl-, Naphthyl-, o-Tolyl- oder (p-Phenyl)phenyl-Rest. Unter den Acylresten seien Reste R-CO- verstanden, in denen R die Bedeutung der hier erwähnten Alkyl- und Arylreste haben kann. Selbstverständlich können die amidischen Wasserstoffatome auch unterschiedliche Substituenten der genannten Art tragen. Ebenfalls kommen solche Harnstoff-Derivate in Betracht, bei denen ein Alkylenrest mit 2 bis 4 Kohlenstoffatomen die unterschiedlichen Stickstoffatome miteinander verbindet, wie z. B. Äthylen- und Propylenharnstoff (2-Imidazolidon oder Tetrahydro-2-pyrimidon) und deren Alkyl-, Acyl- und Arylderivate, wobei ebenfalls mindestens ein amidisches Wasserstoffatom erhalten bleibt

Die Aldehyd- und Ketonharze **A** sind, wie bereits ausgeführt, erhältlich durch Kondensation von Ketonen gemeinsam mit Aldehyden und Harnstoffen, Ketonen mit Harnstoffen oder Aldehyden mit Harnstoffen, und weisen bevorzugt eine Hydroxylzahl von 20 bis 300 mg/g, einen Erweichungspunkt von 60 bis 140 °C und eine zahlenmittlere molare Masse von 500 bis 3000 g/mol auf. Diese Harze werden üblicherweise durch alkalikatalysierte Kondensation der entsprechenden Oxoverbindungen in Gegenwart der Harnstoffe hergestellt. Geeignete Ketonharze leiten sich ab vor allem von cycloaliphatischen Ketonen **A11** mit bevorzugt 5 bis 12 Kohlenstoffatomen im Ring wie Cyclohexanon oder dessen Alkyl-Derivaten, wobei der cycloaliphatische Ring ein oder mehrere Alkylgruppen tragen kann, und die Alkylgruppen unabhängig voneinander 1 bis 8 Kohlenstoffatome aufweisen wie Methylcyclohexanon, 2-Äthylhexylcyclohexanon und tert.-Butyl-Cyclohexanon. Die Harze lassen sich aus diesen Ketonen oder deren Gemischen nach den bekannten Verfahren erhalten. (siehe Ullmann, 4. Aufl., **12,** S. 551, 1976). Weitere geeignete Harze **A** werden durch Kondensation von Aldehyden **A12** in Gegenwart von Harnstoff, substituierten Harnstoffen oder deren Derivaten gemäß **A2** erhalten. Dabei sind die aliphatischen Aldehyde **A12** bevorzugt linear oder verzweigt und haben 2 bis 20, bevorzugt 4 bis 10 Kohlenstoffatome. Besonders bevorzugt sind Kondensate aus Isobutyraldehyd, Formaldehyd und Harnstoff (vgl. Ullmann, 5. Aufl., **A23**, S. 104 f.). Auch Kondensationsprodukte der Aldehyde selbst, wie Aldol oder Crotonaldehyd, lassen sich in Mischung mit den Aldehyden kondensieren. Bei der Herstellung von Mischkondensaten von Aldehyden und Ketonen mit Harnstoffen kann man auch Formaldehyd als Komponente **A12** einsetzen.

Die Hydroxylzahl ist gemäß DIN 53 240 definiert als der Quotient derjenigen Masse $m_{KOH}$ an Kaliumhydroxid, die genausoviel Hydroxylgruppen aufweist wie eine zu untersuchende Probe, und der Masse $m_B$ dieser Probe (Masse des Feststoffes in der Probe bei Lösungen oder Dispersionen); ihre übliche Einheit ist "mg/g".

Die mehrfunktionellen Isocyanate **B** sind bevorzugt ausgewählt aus **B1** (cyclo)aliphatischen, **B2** gemischt aliphatisch-aromatischen und **B3** aromatischen Isocyanaten mit im Mittel mindestens 2 Isocyanat-Gruppen pro Molekül.

Die Isocyanate **B** enthalten keine hydrophilen oder potentiell hydrophilen Gruppen, die beispielsweise durch Umsetzung mindestens eines (mehrfunktionellen) Isocyanats mit Verbindungen erhalten werden, die zusätzlich zur hydrophilen oder potentiell hydrophilen Gruppe (d. h. einer Gruppe, die nach Neutralisation hydrophil wird) mindestens eine gegenüber Isocyanaten reaktive Funktion aufweisen und die einen gemäß dem Zerewitinow-Test aktiven Wasserstoff besitzen. Beispiele für derartige Verbindungen zur hydrophilen Modifikation der Ioscyanate sind Aminocarbonsäure, Hydroxysulfonsäuren, Aminosulfonsäuren sowie Hydroxycarbonsäuren.

Beispiele für geeignete Isocyanate sind Trimethylendiisocyanat, Tetramethylendiisocyanat, Pentamethylendiisocyanat, Hexamethylendiisocyanat (HDI), 1,2-Propylendiisocyanat, Äthyläthylendiisocyanat, 2,3-Dimethyläthylendiisocyanat, 1-Methyltrimethylendiisocyanat, 1,3-Cyclopentylendiisocyanat, 1,4-Cyclohexylendiisocyanat, 1,2-Cyclohexylendiisocyanat, 1,3-Phenylendiisocyanat, 1,4-Phenylendiisocyanat, 2,4-Toluylendiisocyanat (TDI), 2,6-Toluylendiisocyanat (TDI), 4,4'-Biphenylendiisocyanat, 1,5-Naphthylendiisocyanat, 1,4-Naphthylendiisocyanat, 1-Isocyanatomethyl-5-isocyanato-1,3,3-trimethylcyclohexan (IPDI), Bis-(4-isocyanato-cyclohexyl)methan (HMDI), 4,4'-Diisocyanatodiphenyläther, 2,3-Bis-(8-isocyanatooctyl)-4-octyl-5-hexylcyclohexen, die isomeren Trimethylhexamethylendiisocyanate, Tetramethylxylylendiisocyanat (TMXDI), Uretdione und Isocyanurate von obigen Diisocyanaten sowie Allophanate und Biurete abgeleitet von obigen Diisocyanaten. Gemische solcher Di- oder Polyisocyanate können ebenfalls eingesetzt werden. Besonders bevorzugt werden die Diisocyanate, insbesondere TDI, TMXDI, HDI, HMDI und IPDI sowie deren Uretdione, Isocyanurate, Allophanate und Biurete.

Geeignete aliphatische Säuren **C** weisen jeweils mindestens eine gegenüber Isocyanat reaktive Gruppe wie Hydroxylgruppen, Aminogruppen, Mercaptogruppen oder Hydrazin-Gruppen auf, sowie mindestens eine Säuregruppe, bevorzugt eine Carbonoder Sulfonsäuregruppe. Dabei können die als Komponente **C** geeigneten Moleküle auch verschiedenartige solcher Gruppen enthalten, beispielsweise im selben Molekül eine Aminogruppe, eine Hydroxylgruppe und einen Carbonsäuregruppe oder eine Hydroxylgruppe, einen Carbon- und eine Sulfonsäuregruppe. Bevorzugt sind insbesondere Hydroxycarbonsäuren wie Milchsäure, Dimethylolpropionsäure, Weinsäure, Traubensäure, Glykolsäure, Dihydroxybemsteinsäure und Äpfelsäure; Aminosäuren wie Glycin, Alanin, Ornithin, Asparaginsäure, Taurin, Hydroxyaminosäuren wie Tyrosin oder Mercaptoaminosäuren wie Cystein. Besonders bevorzugt wird Dimethylolpropionsäure. Auch diese Komponente kann Mischungen mehrerer der geeigneten Stoffe enthalten.

Die aliphatischen Hydroxylgruppen-haltigen Polyäther gemäß **D** weisen eine zahlenmittlere molare Masse $M_n$ von 200 bis 8000 g/mol und mindestens eine Hydroxylgruppe pro Molekül auf; der Massenanteil an Oxyäthylen-Bausteinen in dem Polyäther(poly)ol beträgt üblicherweise mindestens 50 %, bevorzugt mindestens 80 %. Geeignet sind Polyoxyalkylenglykole wie Polyoxyäthylenglykol und dessen Mischpolymere mit Polyoxypropylen-Bausteinen. Es lassen sich auch die einseitig verätherten Polyäther(poly)ole einsetzen, wie Polyäthylenglykol-monomethyl- oder - - äthyl-äther. Bevorzugt werden Polyäthylenglykole mit (zahlenmittleren) molaren Massen $M_n$ von 200 bis 8000 g/mol und deren Monomethyläther.

Die erfindungsgemäßen Harze **ABCD** sind erhältlich durch Umsetzung der Komponenten **A** bis **D** bei erhöhter Temperatur, vorzugsweise bei 30 bis 200 °C, vorzugsweise in der Schmelze ohne Zusatz eines Lösungsmittels, wobei jedoch gegebenenfalls ein unter den Reaktionsbedingungen inertes, vorzugsweise wasserverdünnbares Lösungsmittel **E'**, in Massenanteilen von bis zu 20 %, bezogen auf die Summe der Massen der Komponenten **A** bis **D** sowie des Lösungsmittels, zugegeben werden kann. Es kann auch günstig sein, Mischungen der Komponenten **C** und **D** einzusetzen. Die Umsetzung wird solange vorgenommen, bis der Gehalt an unreagierten Isocyanatgruppen in der Reaktionsmischung einen Wert von unter 0,1 g/(100 g) erreicht hat. Danach wird (weiteres) wasserverdünnbares Lösungsmittel **E** zugegeben; sofern Verbindungen gemäß **C** eingesetzt wurden, wird durch Zugabe von Aminen oder wäßrigem Ammoniak zumindest teilweise neutralisiert. Die Menge an Alkalien wird dabei so gewählt, daß mindestens die Hälfte der Säuregruppen des Harzes neutralisiert ist. Bevorzugt wird jedoch vollständig neutralisiert.

Das Verhältnis der Masse der Lösungsmittel **E** und **E'** zur Masse des Harzes **ABCD** beträgt vorzugsweise 1: 9 bis 9:1, insbesondere 2:8 bis 4:6. Als besonders vorteilhaft hat sich ein Massenanteil der Lösungsmittel in der Lösung von ca. 4 bis ca. 10 % erwiesen.

Als wasserverdünnbare Lösungsmittel **E'** werden solche Lösungsmittel verwendet, die keine gegenüber Isocyanatgruppen reaktive Gruppen enthalten. Bevorzugt werden Dialkyläther von Äthylenglykol und dessen Oligomeren wie Dimethoxyäthan, Diäthylenglykoldimethyl- und -diäthyl-äther, Di- und Triäthylenglykol-diacetat, Aceton, Methyläthylketon und Diäthylketon.

Die Lösungsmittel **E** sind wasserverdünnbar und dürfen auch zusätzlich solche Gruppen enthalten, die mit Isocyanaten reagieren können. Besonders bevorzugt werden neben den unter **E'** genannten Lösungsmitteln noch die Monoalkyläther von Äthylenglykol und dessen Oligomeren. Hier sind besonders Methoxyäthanol, Äthoxyäthanol und Butoxyäthanol sowie die Methyl- Äthyl- und Butyläther von Diund Triäthylenglykol sowie höheren Oligomeren zu nennen.

Das erhaltene Produkt läßt sich in Wasser zu einer klaren bis milchig-trüben Dispersion mit Massenanteilen von 5 bis ca. 60 % des Harzes **ABCD** in der Dispersion verdünnen. Es ist auch möglich, die Konzentration des Neutralisationsmittels so einzustellen, daß Verdünnung und Neutralisation gleichzeitig vorgenommen werden. Man erhält so eine wäßrige Lösung oder Dispersion des neutralisierten Harzes.

Die erfindungsgemäß hergestellten Harze **ABCD** lassen sich beispielsweise zur Herstellung von wasserverdünnbaren Beschichtungsmitteln einsetzen. Sie sind ausgezeichnet geeignet als Pastenharze zur Herstellung von lösungsmittelarmen und lösungsmittelfreien Pigmentpasten. Sie weisen ein hohes Pigmentbindevermögen auf, sind lagerstabil und verändern in den daraus hergestellten Pigmentpasten ihre Viskosität während der Lagerung nicht oder nicht wesentlich. Diese Pigmentpasten lassen sich leicht in wäßrige Bindemittel einarbeiten. Gegenüber direkt pigmentierten Lacken zeigt sich keine negative Beeinflussung der Lackeigenschaften.

Die folgenden Beispiele erläutern die Erfindung, ohne sie in ihrem Umfang zu beschränken.

In den nachfolgenden Beispielen bedeuten ebenso wie im vorhergehenden Text alle Angaben mit der Einheit "%" Massenanteile, soweit nicht anders angegeben. "Teile" (abgekürzt "Tle") sind stets Massenteile. Konzentrationsangaben in "%" sind Massenanteile des gelösten Stoffes in der Lösung.

**Beispiele**

*1 Herstellung der wasserverdünnbaren Harze*

Es wurden Mischungen der Edukte **A, B, C,** und **D** gemäß den Angaben in der Tabelle 1 in Abwesenheit von Lösungsmitteln hergestellt und unter Rühren auf eine Temperatur von ca. 80 °C erwärmt. Die Reaktionsmischungen wurden bei dieser Temperatur gehalten, bis kein freies Isocyanat mehr nachzuweisen war. Die Reaktionsmischung wurde in einem wasserverdünnbaren Lösungsmittel gelöst und durch Zugabe der in der Tabelle genannten Art und Menge an Neutralisationsmittel neutralisiert. Vor Zugabe des Neutralisationsmittels wurde die Säurezahl der Harze bestimmt (s. Tabelle 1).

Dabei bedeutet "DMPS" Dimethylolpropionsäure, "PEG 750 steht für ein Polyoxyäthylenglykol mit einer zahlenmittleren molaren Masse von ca. 750 g/mol. "BuOEtOH" bedeutet 2-Butoxyäthanol. Als Neutralisationsmittel wurden wäßrige Ammoniak-Lösung ("$NH_4OH$") (25 % $NH_3$ in wäßriger Lösung), Triäthanolamin ("TEA") bzw. Triäthylamin ("$Et_3N$") verwendet. "HDI" bedeutet 1,6-Diisocyanatohexan, "TDI" die kommerziell erhältliche Mischung von Tolylendiisocyanat, und "IPDI" Isophorondiisocyanat. Als "A" wird ein handelsübliches Aldehydharz auf Basis von Acetaldehyd mit einer Säurezahl von 1,5 mg/g bezeichnet, "K" bedeutet ein Ketonharz auf Basis von Cyclohexanon mit einer Hydroxylzahl von 110 bis 150 mg/g.

Tabelle 1

| Harz | B1 | B2 | B3 | B4 | B5 | B6 | B7 |
|---|---|---|---|---|---|---|---|
| Aldehyd/Keton-Harz | A | A | K | A | K | K | K |
| $m$ in g | 1000 | 1000 | 1380 | 1000 | 1380 | 1380 | 1380 |
| Isocyanat | HDI | IPDI | TDI | TDI | HDI | TDI | TDI |
| $m$ in g | 168 | 156 | 522 | 122 | 504 | 522 | 522 |
| Anionogenes Modifizierungsmittel | DMPS | DMPS | DMPS | DMPS | DMPS | DMPS | |
| $m$ in g | 67 | 67 | 201 | 67 | 124 | 134 | |
| nichtionisches Modifizierungsmittel | | | | | | PEG 750 | PEG 750 |
| $m$ in g | | | | | | 750 | 750 |
| Säurezahl des Harzes mg/g | 22,5 | 23 | 40,3 | 23,5 | 25,8 | 20,1 | 0 |
| Lösungsmittel | BuOEtOH | BuOEtOH | BuOEtOH | BuOEtOH | BoOEtOH | BuOEtOH | BuOEtOH |
| $m$ in g | 400 | 400 | 400 | 400 | 400 | 400 | 400 |
| Neutralisationsmittel | $NH_4OH$ | TEA | $Et_3N$ | $Et_3N$ | TEA | TEA | |
| $m$ in g | 30,6 | 45,5 | 136,5 | 45,5 | 84,2 | 91,0 | 0 |

Die Zusammensetzungen werden durch Angabe der Masse m des jeweiligen Eduktes (Ausgangsstoffes) in g beschrieben.

## 2 Lacktechnische Prüfung der Pigmentpastenharze B1 bis B7

Mit den Pastenharzen B1 bis B7 wurden weiße Pigmentpasten nach dem folgenden Rezept hergestellt:

| | |
|---|---|
| 250 | Tle Pigmentpastenharz, 40 % in Wasser |
| 20 | Tle Additol® VXW 6213 (Netzmittel) |
| 2 | Tle Additol® VXW 6210 (Entschäumer) |
| 3 | Tle Additol® XL 297 (Antihautmittel für lufttrocknende Lackbindemittel) |
| 100 | Tle Wasser |
| $\overline{375}$ | Tle Pigmentpastenharz-Zubereitung |
| 500 | Tle Titandioxid-Pigment (®Kronos 2310). |

Die Viskosität der Pasten betrug zwischen 700 und 1000 mPa·s.

Die erfindungsgemäß hergestellten Pastenharze sind lagerstabil und weisen ein hohes Pigment-Bindevermögen auf.

## 3 Lackprüfung

Mit der Pigmentpaste aus dem Harz B3 und der Pigmentpaste aus dem Harz B4 wurden mit unterschiedlichen wäßrigen Bindemitteln in dem in Tabelle 3 angegebenen Verhältnis der Masse des Pigments ($m_P$) zur Masse des Bindemittels ($m_B$) Lacke hergestellt.

Tabelle 3

| LackNr. | L1 | L2 | L3 | L4 | L5 | L6 |
|---|---|---|---|---|---|---|
| Bindemittel | a | b | c | d | a | d |
| Pigmentpaste | aus B3 | aus B4 | aus B3 | aus B4 | aus B3 | aus B4 |
| $m_P/m_B$ | 1:1 | 0,2:1 | 0,2:1 | 1:1 | 0,2:1 | 0,2:1 |

Bindemittel a ist ein wasserverdünnbares acrylat-modifiziertes Langöl-Alkydharz, das in Wasser zu einem Festkörper-Massenanteil von ca. 38 % dispergiert wurde (®Resydrol AY 586 w der Vianova Resins AG).

Bindemittel b ist eine Mischung eines wasserverdünnbaren acrylat-modifizierten Langöl-Alkydharzes mit einem unmodifizierten wasserverdünnbaren Langöl-Alkydharz, in Wasser zu einem Festkörper-Massenanteil von ca. 45 % dispergiert (®Resydrol VAY 6278 der Vianova Resins AG).

Bindemittel c ist eine wäßrige, mit trocknenden Fettsäuren modifizierte Polyurethandispersion (®Daotan VTW 1252, Vianova Resins GmbH & Co. KG).

Bindemittel d ist ein wasserverdünnbares, mit Epoxidharz modifiziertes Alkydharz, das zu einem Festkörper-Massenanteil von ca. 70 % in 2-Butoxyäthanol gelöst wurde (®Resydrol AX 246 der Vianova Resins AG).

Mit diesen Lacken L1 bis L6 wurden Stahlplatten in einer Naßfilmdicke von 150 µm beschichtet. An den Testplatten wurde die Vergilbung nach dem Einbrennen bestimmt. Als Vergleich V1 bis V6 wurde jeweils das direkt pigmentierte Bindemittel a bis d bei gleichem Pigment-Bindmittel-Massenverhältnis und mit denselben Additiven herangezogen.

Die Pendelhärte wurde nach König (DIN 53 157) nach ein- bzw. siebentägiger Lagerung bei Raumtemperatur nach der Applikation und Einbrennen bestimmt.

Die mechanische Beständigkeit der Beschichtungen wurde bei einer Trockenschichtdicke von 30 bis 35 µm nach 7 d Lagerung bei RT durch Tiefungsprüfung nach DIN EN ISO 1520 und durch Schlagprüfung nach ASTM D 2794 geprüft, die Korrosionsanfälligkeit durch Wasserlagerung bei 40 °C nach ISO 2812 T2 und durch die Feuchtschrankbeständigkeit (Tropentest) nach DIN 53210.

Tabelle 3

| Prüflack | Pendlehärte in s | | mechanischer Test | Korrosionstest |
|---|---|---|---|---|
| | nach 1 d | nach 7 d | | |
| L1 | 22 | 39 | 0 | + |
| V1 | 22 | 39 | | |
| L2 | 39 | 37 | 0 | 0 |
| V2 | 30 | 32 | | |
| L3 | 50 | 110 | 0 | 0 |
| V3 | 50 | 72 | | |
| L4 | 156 | 148 | - | 0 |
| V4 | 157 | 148 | | |
| L5 | 9 | 44 | 0 | 0 |
| V5 | 11 | 37 | | |
| L6 | 167 | 171 | - | 0 |
| V6 | 170 | 171 | | |
| 0: kein Unterschied zwischen den L- und V-Proben | | | | |
| +: L-Probe ist bis zu 10 % besser im Test als V-Probe | | | | |
| -: L-Probe ist bis zu 10 % schlechter im Test als V-Probe | | | | |

Aus diesen Ergebnissen ist zu erkennen, daß es möglich ist, mit den erfindungsgemäßen Pastenharzen eine Reihe verschiedenster wäßriger Pigmentpasten herzustellen und mit ausgezeichnetem Ergebnis Lacke zu pigmentieren, ohne das anwendungstechnische Eigenschaftsprofil der Lacke negativ zu beeinflussen. Durch die Temperaturbelastung beim Einbrennen wird der Lack nicht oder nur unwesentlich vergilbt. Dies ist ein wesentlicher Vorteil gegenüber den aus AT 1682/97 bekannten wasserverdünnbaren Pigmentpastenharzen auf Basis von Aldehyd- bzw. Ketonharzen.

Die bekannten Handhabungsvorteile bei Verwendung von Pigmentpasten gegenüber der Alternative der direkten Pigmentierung der Lacke lassen sich also auch bei Verwendung von Aldehyd- bzw. Ketonharzen in wäßrigen Lacksystemen erreichen, ohne daß die mit Hilfe solcher Pasten hergestellten Lacke und die damit hergestellten Beschichtungen schlechtere Gebrauchseigenschaften zeigen.

**Patentansprüche**

1.    Verfahren zur Herstellung von wasserverdünnbaren urethanmodifizierten Pasten- und Zumischharzen **ABCD**, wobei eine Reaktionsmischung mit Massenanteilen von

| | |
|---|---|
| 10 bis 90 % | Aldehyd- bzw. Keton-Harzen **A** mit einer Hydroxylzahl von 20 bis 300 mg/g, einer Erweichungstemperatur von 60 bis 140 °C und einer zahlenmittleren molaren Masse $M_n$ von 500 bis 3000 g/mol, |
| 5 bis 30 % | mehrfunktionellen Isocyanaten **B** mit im Mittel mindestens 2 Isocyanat-Gruppen pro Molekül, |
| 0 bis 30 % | aliphatischen Säuren **C** mit jeweils mindestens einer Säuregruppe und jeweils mindestens einer Gruppe, die mit Isocyanaten unter Bildung einer Urethan-oder Harnstoff Struktur reagieren kann, sowie |
| 0 bis 70 % | eines aliphatischen Polyäthers **D** mit einer zahienmittleren molaren Masse $M_n$ von 200 bis 8000 g/mol und mindestens einer Hydroxylgruppe pro Molekül, |

bei erhöhter Temperatur umgesetzt wird, bis der Massenanteil von Isocyanat-Gruppen in der Reaktionsmischung unter 0,1 % gesunken ist, wobei die Summe der Massenanteile der Edukte **A** bis **D** stets 100 % ergibt, und mindestens eines der Edukte **C** und **D** eingesetzt wird.

2.    Verfahren nach Anspruch 1, **dadurch gekennzeichnet, daß** die Aldehyd- bzw. Keton-Harze **A** durch Kondensation von (cyclo)aliphatischen Oxoverbindungen **A1** ausgewählt aus (cyclo)aliphatischen Ketonen **A11** und aliphatischen Aldehyden **A12** gemeinsam mit Harnstoff oder dessen Derivaten **A2** erhältlich sind.

**3.** Verfahren nach Anspruch 1, **dadurch gekennzeichnet, daß** die mehrfunktionellen Isocyanate **B** ausgewählt sind aus **B1** (cyclo)aliphatischen, **B2** gemischt aliphatisch-aromatischen und **B3** aromatischen Isocyanaten mit im Mittel mindestens 2 Isocyanat-Gruppen pro Molekül.

**4.** Verfahren nach Anspruch 1, **dadurch gekennzeichnet, daß** die aliphatischen Säuren **C** jeweils mindestens einer Säuregruppe ausgewählt aus Carbon- und Sulfonsäuregruppen und jeweils mindestens einer Gruppe, die mit Isocyanaten unter Bildung einer Urethan- oder Harnstoff-Struktur reagieren kann, aufweisen.

**5.** Verfahren nach Anspruch 1, **dadurch gekennzeichnet, daß** die aliphatischen Polyäther **D** einen Massenanteil von mindestens 50 % an Oxyäthylen-Bausteinen aufweisen.

**6.** Verfahren nach Anspruch 1, **dadurch gekennzeichnet, daß** die Ausgangsstoffe gemischt werden und anschließend bei einer Temperatur von 30 bis 200 °C umgesetzt werden.

**7.** Verfahren nach Anspruch 1, **dadurch gekennzeichnet, daß** anschließend an die Umsetzung wasserverdünnbare Lösungsmittel E zugegeben werden, wobei das Verhältnis der Masse der Lösungsmittel **E** zur Masse des Harzes **ABCD** 1:9 bis 9:1 beträgt.

**8.** Verfahren nach Anspruch 1, **dadurch gekennzeichnet, daß** nach der Umsetzung mit wäßrigem Ammoniak oder Aminen neutralisiert wird, falls eine Verbindung gemäß C eingesetzt wird.

**9.** Verfahren nach Anspruch 1, **dadurch gekennzeichnet, daß** als Komponente **C** Dimethylolpropionsäure und als Komponente **D** Polyäthylenglykole mit einer zahlenmittleren molaren Masse von 200 bis 8000 g/mol oder deren Monomethyläther eingesetzt werden.

**10.** Verwendung von gemäß Anspruch 1 hergestellten Harzen zur Herstellung von Pigmentpasten für wasserverdünnbare Lacke.

## Claims

**1.** A process for preparing water-dilutable urethane-modified pasting resins and admixing resins **ABCD**, by reacting a reaction mixture comprising massed fractions of

| | |
|---|---|
| 10 to 90 % | aldehyde resins and/or ketone resins **A** having a hydroxyl number of from 20 to 300 mg/g, a softening temperature of from 60 to 140 °C and a number-average molar mass $M_n$ of from 500 to 3000 g/mol, |
| 5 to 30 % | of polyfunctional isocyanates **B** having on average at least 2 isocyanate groups per molecule, |
| 0 to 30 % | aliphatic acids **C** having in each case at least one acid group and in each case at least one group that can react with isocyanates to form a urethane structure or urea structure, and |
| 0 to 70 % | of an aliphatic polyether **D** having a number-average molar mass $M_n$ of from 200 to 8000 g/mol, and at least one hydroxyl group per molecule, |

at elevated temperature until the mass fraction of isocyanate groups in the reaction mixture has fallen below 0.1 %, the sum of the mass fractions of the reactants **A** to **D** always being 100%, and at least one of the reactants **C** and **D** being used.

**2.** A process as claimed in claim 1, wherein the aldehyde resins and/or ketone resins **A** are obtainable by condensing (cyclo)aliphatic oxo-compounds **A1** selected from (cyclo)aliphatic ketones **A11** and aliphatic aldehydes **A12** together with urea or its derivatives **A2**.

**3.** A process as claimed in claim 1, wherein the polyfunctional isocyanates **B** are selected from **B1** (cyclo)aliphatic, **B2** mixed aliphatic-aromatic, and **B3** aromatic isocyanates having on average at least 2 isocyanate groups per molecule.

**4.** A process as claimed in claim 1, wherein the aliphatic acids **C** have in each case at least one acid group selected from carboxylic and sulfonic acid groups and in each case at least one group that can react with isocyanates to form a urethane structure or urea structure.

5. A process as claimed in claim 1, wherein the aliphatic polyethers **D** have a mass fraction of at least 50% of oxyethylene units.

6. A process as claimed in claim 1, wherein the starting materials are mixed and subsequently reacted at a temperature of from 30 to 200 °C.

7. A process as claimed in claim 1, wherein after the reaction water-dilutable solvents **E** are added, the ration of the mass of the solvents E to the mass of the resin **ABCD** being from 1:9 to 9:1.

8. A process as claimed in claim 1, wherein after the reaction neutralization is carried out with aqueous ammonia or amines if a compound **C** is used.

9. A process as claimed in claim 1, wherein as component **C** dimethylolpropionic acid is used and as component **D** polyethylene glycols having a number-average molar mass of from 200 to 8 000 g/mol or their monomethyl ethers are used.

10. The use of resins prepared as claimed in claim 1 to produce pigment pastes for water-dilutable paints.


**Revendications**

1. Préparation de résines en pâte et de résines de mélange **ABCD,** en faisant réagir un mélange réactionnel avec des taux en masse

de 10 à 90 % de résines aldéhydiques ou de résines cétoniques **A** présentant un indice hydroxyle de 20 à 300 mg/g, une température de ramollissement de 60 à 140°C et une masse moléculaire moyenne en nombre $M_n$ de 500 à 3000 g/mole,
de 5 à 30 % en masse d'isocyanates multifonctionnels **B** présentant en moyenne au moins 2 groupes isocyanato par molécule,
de 0 à 30 % d'acides aliphatiques **C** présentant chacun au moins un groupe acide et chacun au moins un groupe qui peut réagir sur les isocyanates en formant une structure uréthanne ou urée, ainsi que
de 0 à 70 % d'un polyéther aliphatique **D** ayant une masse molaire moyenne en nombre $M_n$ de 200 à 8000 g/mole et au moins un groupe hydroxyle par molécule,

à température élevée, jusqu'à ce le taux en masse de groupes isocyanato dans le mélange réactionnel ait baissé au-dessous de 0,1 %, la somme des taux en masse des produits de départ **A** à **D** étant toujours de 100 %, et en utilisant au moins un des produits de départ **C** et **D.**

2. Procédé selon la revendication 1, **caractérisé en ce qu'**on peut obtenir les résines aldéhydiques ou cétoniques **A** par condensation de composés oxo (cyclo)aliphatiques **A1** pris parmi les cétones (cyclo)aliphatiques **A11** et les aldéhydes aliphatiques **A12** conjointement avec l'urée ou ses dérivés **A2.**

3. Procédé selon la revendication 1, **caractérisé en ce que** les isocyanates multifonctionnels **B** sont pris parmi les isocyanates **B1** (cyclo) aliphatiques, **B2** mixtes aliphatiques-aromatiques et **B3** aromatiques, présentant en moyenne au moins 2 groupes isocyanato par molécule.

4. Procédé selon la revendication 1, **caractérisé en ce que** les acides aliphatiques **C** présentent à chaque fois au moins un groupe acide pris parmi les groupes acides carboxyliques et acides sulfoniques et à chaque fois au moins un groupe qui peut réagir sur les isocyanates en formant une structure uréthanne ou une structure urée.

5. Procédé selon la revendication 1, **caractérisé en ce que** les polyéthers aliphatiques **D** présentent un taux en masse d'au moins 50 % d'éléments constitutifs oxyéthylène.

6. Procédé selon la revendication 1, **caractérisé en ce qu'**on mélange les matières de départ et ensuite on les fait réagir à une température de 30 à 200°C.

7. Procédé selon la revendication 1, **caractérisé en ce qu'**on ajoute, suite à la réaction, des solvants diluables par l'eau **E**, le rapport de la masse du solvant E à la masse de la résine **ABCD** étant de 1:9 à 9:1.

8. Procédé selon la revendication 1, **caractérisé en ce qu'**on neutralise après la réaction par l'ammoniaque aqueux ou par des amines, dans le cas où l'on utilise un composé selon **C**.

9. Procédé selon la revendication 1, **caractérisé en ce qu'**on utilise en tant que composant **C** l'acide diméthylpropionique et en tant que composant **D** des polyéthylèneglycols avec une masse molaire moyenne en nombre de 200 à 8000 g/mole ou leurs éthers monométhyliques.

10. Utilisations des résines préparées selon la revendication 1 pour la préparation de pigments en pâte pour vernis diluables par l'eau.